# EUROPÄISCHE PATENTSCHRIFT

(11) **EP 0 799 088 B1**
(45) Veröffentlichungstag und Bekanntmachung des Hinweises auf die Patenterteilung: **11.07.2001**
(21) Anmeldenummer: 95942132.2
(22) Anmeldetag: 13.12.1995
(51) Int. Cl.: B01J 19/12, C08J 3/28, B29C 59/14

(54) **VERFAHREN ZUR BEEINFLUSSUNG DER DISPERGIERBARKEIT, EMULGIERBARKEIT, LÖSLICHKEIT UND/ODER REAKTIVITÄT VON NIEDERMOLEKULAREN ALKYLGRUPPENHALTIGEN FESTSTOFFEN**
PROCESS FOR INFLUENCING THE CAPABILITY OF LOW-MOLECULAR ALKYL GROUP-CONTAINING SOLIDS TO BE DISPERSED, EMULSIFIED, DISSOLVED AND/OR REACTED
PROCEDE POUR INFLUER SUR LA DISPERSIBILITE, L'EMULSIONNABILITE, LA SOLUBILITE ET/OU LA REACTIVITE DE SOLIDES A FAIBLE POIDS MOLECULAIRE CONTENANT DES GROUPES ALKYLE

(30) Priorität: 22.12.1994 DE 4447375
(43) Veröffentlichungstag der Anmeldung: 08.10.1997
(73) Patentinhaber: ARPLAS Gesellschaft für Plasmatechnologie mbH, 06766 Wolfen-Thalheim (DE)
(72) Erfinder: BERGER, Steffen, D-40625 Düsseldorf (DE)
(86) Internationale Anmeldenummer: EP9504911
(87) Internationale Veröffentlichungsnummer: WO9619285

(56) Entgegenhaltungen:
- EP-A- 0 122 289
- EP-A- 0 593 988
- WO-A-95/03344
- DE-A- 4 141 805
- GB-A- 1 326 197
- CHEMICAL ABSTRACTS, vol. 81, no. 6, 12.August 1974 Columbus, Ohio, US; abstract no. 26473d, T. KAGIYA & M. HAGIWARA 'Poly(tetrafluoroethylene) resin wax' Seite 41; Spalte R; & JP,A,48 078 252 (JAPAN ATOMIC ENERGY RESEARCH INSTITUTE ) 20.Oktober 1973

## Beschreibung

Die Erfindung betrifft ein Verfahren zur Beeinflussung der Dispergierbarkeit, Emulgierbarkeit, Löslichkeit und/oder Reaktivität von niedermolekularen alkylgruppenhaltigen Feststoffen.

WO-A-9 503 344 offenbart ein verfahren zur Herstellung eines Kunststoffes aus Polyolefinen, welche einer Niedertemperatur-Plasmabehandlung in einem Freqenzbereich von 30 KHz bis 10 GHz unterzogen werden.

Es ist bekannt, daß niedermolekulare alkygruppenhaltige Feststoffe, beispielsweise Paraffine, Fettsäuren, Fettalkohole und Fettsäureester, auf vielen Gebieten eingesetzt werden können.

Hierzu werden bei vielen Anwendungsfällen aus den niedermolekularen alkylgruppenhaltigen Feststoffen beispielsweise Dispersionen, Emulsionen oder Lösungen hergestellt. Hierbei ist nachteilig, daß entsprechend dem Anteil der Alkylgruppen bei den niedermolekularen alkylgruppenhaltigen Feststoffen sich eine unterschiedliche Dispergierbarkeit, Emulgierbarkeit oder Löslichkeit in polaren Flüssigkeiten, wie beispielsweise Wasser, ergibt. Je höher der Gehalt an Alkylgruppen ist, desto schlechter lassen sich die Feststoffe in derartigen Flüssigkeiten dispergieren, emulgieren oder lösen. Um diese Nachteile auszugleichen, ist es bekannt, Hilfschemikalien, wie beispielsweise Dispergatoren oder Emulgatoren, einzusetzen. Aufgrund der relativ schlechten Dispergierbarkeit, Emulgierbarkeit oder Löslichkeit ergibt sich außerdem, daß mittels der niedermolekulen alkylgruppenhaltigen Feststoffe lediglich eine relativ niedrige Feststoffdichte in den Dispersionen, Emulsionen oder Lösungen erreichbar ist. Weiterhin beeinflußt der Gehalt an Alkylgruppen die Reaktivität des jeweiligen niedermolekularen alkylgruppenhaltigen Feststoffes. Je höher der Gehalt an Alkylgruppen ist, desto geringer ist in der Regel seine Reaktivität. Hierdurch werden die Anwendungsmöglichkeiten der niedermolekularen alkylgruppenhaltigen Feststoffe eingeschränkt.

Aus EP-A-0 122 289 ist ein Verfahren zur Behandlung von Gelatinemitteln bekannt, wobei die Wasserlöslichkeit von Gelatinemitteln mittels einer Behandlung mit einem Nichtgleichgewichtsplasma verbessert werden soll. Die Plasmabehandlung erfolgt mit einem Nichtgleichgewichtsplasma, bei dem entweder eine Frequenz von 13,56 MHz oder eine Frequenz von 2,45 GHz zur Plasmaanregung eingesetzt wird.

Aus Kunststoff-Taschenbuch, 25. Ausgabe, Seite 248 bis 259, ist ein Verfahren zur Nachbehandlung von alkylgruppenhaltigen Feststoffen bekannt. Hierbei wird die Oberfläche des alkylgruppenhaltigen Feststoffes, beispielsweise eine PE-Oberfläche, mittels eines Hochspannungsplasmas behandelt, um eine lokale chemische Modifizierung zu erreichen. Auf Grund dieser lokalen Oberflächenbehandlung, beispielsweise bei Formteilen, wird eine Verbesserung der Lackierbarkeit beziehungsweise Bedruckbarkeit erreicht.

Der Erfindung liegt die Aufgabe zugrunde, ein Verfahren der gattungsgemäßen Art zu schaffen, mit dem in einfacher und kostengünstiger Weise eine Beeinflussung einer Dispergierbarkeit, Emulgierbarkeit, Löslichkeit und/oder Reaktivität von niedermolekularen alkylgruppenhaltigen Feststoffen möglich ist.

Erfindungsgemäß wird diese Aufgabe dadurch gelöst, daß die niedermolekularen alkylgruppenhaltigen Feststoffe einer Plasmabehandlung mit wechselnden Frequenzen in einem Frequenzbereich von 10 kHz bis 10 GHz unterzogen werden. Es wurde überraschenderweise gefunden, daß durch die Plasmabehandlung innerhalb der niedermolekularen alkylgruppenhaltigen Feststoffe gezielt eine Veränderung von Materialeigenschaften herbeiführbar ist. Insbesondere lassen sich durch die Plasmabehandlung chemische Spezialprodukte erzielen, die auf vielfältige Weise eingesetzt werden können. Außerdem wird es sehr vorteilhaft möglich, mittels der Plasmabehandlung eine Dispergierbarkeit, Emulgierbarkeit oder Löslichkeit der niedermolekularen alkylgruppenhaltigen Feststoffe in polaren Flüssigkeiten zu beeinflussen. Durch die Plasmabehandlung ergibt sich der überraschende Effekt, daß je nach Gehalt an Alkylgruppen der niedermolekularen alkylgruppenhaltigen Feststoffe gezielt eine Dispergierbarkeit, Emulgierbarkeit, Löslichkeit und Reaktivität der niedermolekularen alkylgruppenhaltigen Feststoffe verbessert werden kann. Durch diese bessere Verarbeitbarkeit lassen sich höhere Feststoffdichten in Dispersionen oder Emulsionen erzielen. Etwa vorhandene Abstoßreaktionen zwischen den einzelnen Teilchen der niedermolekularen alkylgruppenhaltigen Feststoffe in einer Dispersion oder Emulsion werden durch die Plasmabehandlung gezielt verringert, so daß eine gleichmäßigere und dichtere Feststoffverteilung erreichbar ist. Auf den zusätzlichen Einsatz von Hilfsmitteln, wie Dispergatoren oder Emulgatoren, kann weitgehend verzichtet werden.

In vorteilhafter Ausgestaltung der Erfindung ist vorgesehen, daß die Plasmabehandlung mit Kombinationen verschieden hoher, wechselnder Frequenzen durchgeführt wird. So kann sehr vorteilhaft die Plasmabehandlung mit nacheinander zuschaltbaren Frequenzen, mit abwechselnd zuschaltbaren, unterschiedlich hohen Frequenzen, mit wenigstens zwei gleichzeitig zuschaltbaren, verschieden hohen Frequenzen und sich hieraus ergebenden Kombinationen an Frequenzzuschaltungen durchgeführt werden. Hierdurch kann sehr vorteilhaft auf den unterschiedlichen chemischen Aufbau der eingesetzten niedermolekularen alkylgruppenhaltigen Feststoffe sowie deren Verwendungszweck nach der Plasmabehandlung abgestimmt werden.

In weiterer vorteilhafter Ausgestaltung der Erfindung ist vorgesehen, daß die Plasmabehandlung unter Zufuhr wenigstens eines Inertgases, beispielsweise Helium und/oder Argon, und/oder unter Zufuhr wenigstens eines Reaktionsgases, beispielsweise Sauerstoff und/oder Stickstoff und/oder Monomere, durchgeführt wird. Weiterhin bevorzugt ist, wenn die Plasmabehandlung nacheinander mit einem Inertgasplasma und wenigstens einem Reaktionsgasplasma und/oder einem Reaktionsgasplasmagemisch oder unter Zufuhr eines Gemisches aus wenigstens einem Inertgas und einem Reaktionsgas durchgeführt wird. Durch Auswahl einer auf die zu modifizierenden niedermolekularen alkylgruppenhaltigen Feststoffe abgestimmten Zusammensetzung des Prozeßgases während der Plasmabehandlung (Inertgas, Reaktionsgas, Reaktionsgasgemisch) ist es möglich, in die niedermolekularen alkylgruppenhaltigen Feststoffe die zur chemischen Modifizierung erforderlichen reaktiven Gruppen, beispielsweise Hydroxylgruppen, Carboxylgruppen, primäre und sekundäre Aminogruppen, in ausreichendem Maße einzubauen. Diese eingebauten Gruppen sind in der Lage, mit dem niedermolekularen alkylgruppenhaltigen Feststoff zu reagieren und chemische Bindungen einzugehen und/oder physikalisch zu haften. Weitere einbaubare polare, aber nicht reaktive Gruppen, beispielsweise Carbonylgruppen, tertiäre Aminogruppen, können ebenfalls eine Eigenschaftsänderung der niedermolekularen alkylgruppenhaltigen Feststoffe bewirken.

Die behandelten niedermolekularen alkylgruppenhaltigen Feststoffe besitzen eine relativ homogene Verteilung der eingebrachten reaktiven beziehungsweise nichtreaktiven Gruppen über die gesamte Raumausdehnung der niedermolekularen alkylgruppenhaltigen Feststoffe. Es sind somit niedermolekulare alkylgruppenhaltige Feststoffe jeglicher Art erzielbar, die nach der Plasmabehandlung für bestimmte Anwendungsfälle geeignet sind. Die Einstellung der niedermolekularen alkylgruppenhaltigen Feststoffe auf ihren speziellen Anwendungsfall kann in einfacher Weise durch die erfindungsgemäße Plasmabehandlung erfolgen.

Insgesamt wurde der überraschende Effekt der Erfindung ausgenutzt, daß Kenngrößen wie beispielsweise Molekulargewicht keinen signifikanten Einfluß auf die Stärke des durch die Plasmabehandlung erzielten Effektes haben, sondern hierfür vor allem der Gehalt an Alkylgruppen und die Teilchengröße im Ausgangsmaterial entscheidend ist. In dem Ausgangsmaterial bereits vorhandene funktionelle Gruppen haben überraschenderweise keinen signifikanten Einfluß auf den Effekt der erfindungsgemäßen Plasmabehandlung. Durch eine Auswahl einer auf den chemischen Aufbau des Ausgangsmaterials abgestimmten Zusammensetzung der Prozeßgase sowie einer insbesondere darauf abgestimmten Abfolge von Frequenzkombinationen ist es möglich, verschiedene funktionale Gruppen in Ausrichtung auf den Endverwendungszweck sowie die zu erzielende Dispergierbarkeit, Emulgierbarkeit, Löslichkeit und Reaktivität und auf die in diesem Zusammenhang verwendeten Dispergier-, Emulgier- und Lösungsmittel, einzubauen.

Weitere vorteilhafte Ausgestaltungen der Erfindung ergeben sich aus den übrigen in den Unteransprüchen genannten Merkmalen.

Die Erfindung wird nachfolgend in einem Ausführungsbeispiel anhand der zugehörigen Zeichnungen näher erläutert. Es zeigen:
- Figur 1: einen Verfahrensablauf zur Behandlung von niedermolekularen alkylgruppenhaltigen Feststoffen in einem Flußdiagramm und
- Figur 2: eine schematische Darstellung einer Anordnung zur Durchführung des Verfahrens.

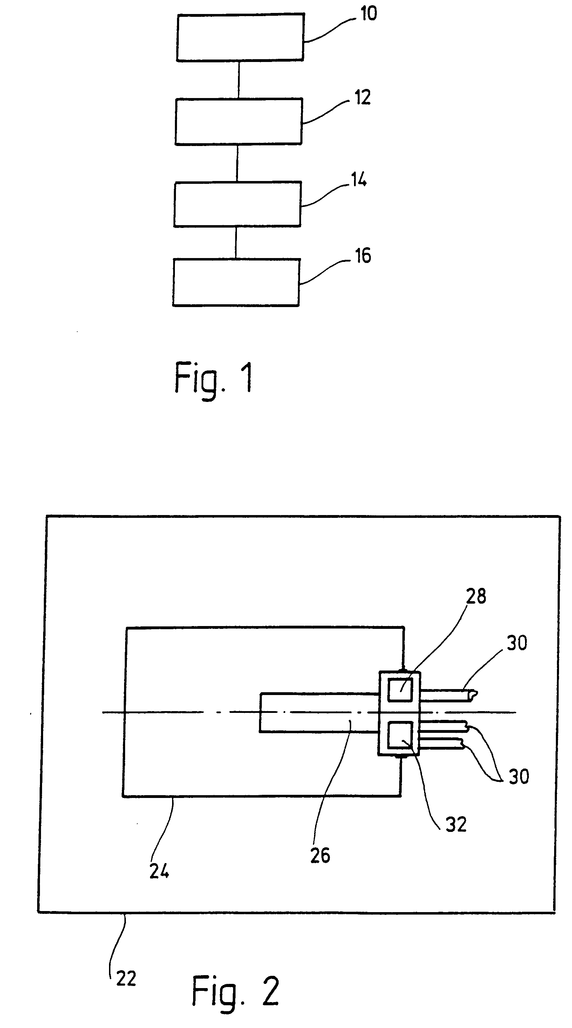

In der Figur 1 soll das erfindungsgemäße Verfahren mit Hilfe eines Diagrammes verdeutlicht werden. In einem ersten Schritt 10 werden die als Ausgangsmaterialien zur Verfügung stehenden niedermolekularen alkylgruppenhaltigen Feststoffe vorbereitet. In einem nächsten Schritt 12 wird das vorbereitete Ausgangsmaterial in eine Prozeßkammer gegeben. Die Prozeßkammer kann dabei beispielsweise eine Drehtrommel eines an sich bekannten Plasmaofens zur Durchführung einer Plasmabehandlung sein.

In einem nächsten Schritt 14 werden die für die Behandlung des Ausgangsmaterials gewünschten Prozeßparameter und Prozeßgase eingestellt. Hierbei werden insbesondere die speziellen Kombinationen der Prozeßgase, das heißt, eine erste Behandlung mit einem Inertgasplasma, vorzugsweise mit Helium und/oder Argon, und die nachfolgende Behandlung mit einem Reaktionsgasplasma, vorzugsweise mit Sauerstoff und/oder Stickstoff und/oder Monomere oder auch die Behandlung mit einem Plasma, das aus einem Gemisch der vorgenannten Gase erzeugt wird, festgelegt. Weiterhin erfolgt die Einstellung der zur Plasmaerzeugung im Vakuum notwendigen Hochfrequenzen und deren zeitliche Abfolge. So sind Varianten denkbar, in der erst mit einer niederen Frequenz, beispielsweise 13,56 MHz, und anschließend mit einer höheren Frequenz, beispielsweise 2,45 GHz, eine Plasmabehandlung durchgeführt wird. Darüber hinaus ist eine alternierende Zuschaltung der Frequenzen denkbar. Selbstverständlich können auch andere Frequenzen in beliebiger, frei wählbarer Reihenfolge zur Durchführung der Plasmabehandlung eingestellt werden. Weiterhin kann eine alternierende, gegebenenfalls auch gleichzeitige Zuschaltung verschieden hoher Frequenzen vorgegeben werden. Im übrigen wird die gewünschte Drehzahl der Drehtrommel, beispielsweise im Bereich zwischen 4 und 20 Umdrehungen pro Minute, sowie der gewünschte Prozeßdruck, der beispielsweise im Bereich zwischen 0,1 mbar und 2 mbar liegt, eingestellt. Während der Plasmabehandlung kann der Prozeßdruck verfahrensbedingt Schwankungen unterliegen. Weiterhin wird die Behandlungsdauer festgelegt, mit der die Behandlung des Ausgangsmaterials erfolgt. Diese beträgt beispielsweise zwischen 5 und 900 s. Die genannten Prozeßparameter beziehungsweise Prozeßgase können untereinander in beliebiger Zusammenstellung variiert werden und sind insbesondere auf die Zusammensetzung des jeweiligen, konkret vorliegenden Ausgangsmaterials abgestimmt.

In einem nächsten Schritt 16 erfolgt dann die Plasmabehandlung des Ausgangsmaterials mit den in dem Schritt 14 eingestellten Prozeßparametern beziehungsweise Prozeßbedingungen. Hierbei ist es ebenfalls denkbar, daß während der Plasmabehandlung in dem Schritt 16 eine Veränderung und/oder Anpassung der Prozeßparameter, beispielsweise durch eine Regelung, erfolgen kann. Durch die beschriebene Kombination der Prozeßgase und der Prozeßparameter der Plasmabehandlung ist der zum Zweck einer nachfolgenden Verwendung der niedermolekularen alkylgruppenhaltigen Feststoffe erforderliche Einbau reaktiver Gruppen in Abhängigkeit von dem eingesetzten Ausgangsmaterial in ausreichendem Maße erreichbar. Während der Plasmabehandlung erfolgt gegebenenfalls eine Kühlung der Feststoffe, da diese einen relativ niederen Schmelzpunkt aufweisen können. Hierdurch wird ein Übergehen der Ausgangsmaterialien in eine Schmelze, aufgrund der Wärmeentwicklung bei der Plasmabehandlung, verhindert.

Das erfindungsgemäße Verfahren beschränkt sich nicht darauf, einen bestimmten niedermolekularen alkylgruppenhaltigen Feststoff zu behandeln. So ist es möglich, Gemische verschiedener niedermolekularer alkylgruppenhaltiger Feststoffe in einer wählbaren Zusammensetzung der Plasmabehandlung zu unterziehen. Dies ist in einfacher Weise möglich, indem beispielsweise in Granulatform vorliegende, verschieden niedermolekulare alkylgruppenhaltige Feststoffe in bestimmten, jeweils wählbaren Mengeneinheiten gemischt werden.

In der Figur 2 ist schematisch der Aufbau einer für das Verfahren einsetzbaren Vorrichtung gezeigt. Eine allgemein mit 22 bezeichnete Plasmaanlage weist eine Drehtrommel 24 auf. Die Drehtrommel 24 dient als Prozeßkammer und kann beispielsweise aus einem beständigen Material wie Aluminium oder Edelstahl bestehen. Die Prozeßkammer ist zur Erzeugung eines Vakuums hermetisch abschließbar, wobei hier auf Einzelheiten nicht weiter eingegangen werden soll. Der Drehtrommel 24 ist eine als Reaktor dienende Einrichtung 26 zugeordnet, die mit einem Generator 28 zur Mikrowellenplasmaanregung und einer Hochfrequenzeinspeisung 32 gekoppelt ist. Weiterhin sind Zuleitungen 30 zum Heranführen von Prozeßgasen vorgesehen.

Die hier dargestellte Anordnung ist nur beispielhaft, und die Erfindung bezieht sich im einzelnen nicht auf den konkreten Aufbau der Anlage. Das erfindungsgemäße Verfahren kann selbstverständlich auch mit einer analogen, die einzelnen Verfahrensschritte vollziehenden Vorrichtung durchgeführt werden.

Das erfindungsgemäße Verfahren läuft nunmehr auf folgende Weise ab. Der ausgewählte und vorbereitete niedermolekulare alkylgruppenhaltige Feststoff (gegebenenfalls ein Gemisch aus verschiedenen Feststoffen) wird in die Drehtrommel 24 gegeben und dort entsprechend der gewählten Drehgeschwindigkeit und Drehrichtung, die auch abwechselnd gewählt. werden kann, vermischt. Über die Zuleitungen 30 wird das gewählte Prozeßgas beziehungsweise Prozeßgasgemisch zugeführt und über den Generator 28 in dem Reaktor 26 ein Plasma erzeugt. Die Plasmaerzeugung kann hierbei vorzugsweise mit einer Mikrowelleneinstrahlung bei Leistungen zwischen 200 und 1500 W (2,45 GHz) erfolgen. Das Prozeßgas oder Prozeßgasgemisch weist hierbei vorzugsweise einen Prozeßdruck zwischen 0,1 und 2 mbar auf. Über die Hochfrequenzeinspeisung 32 wird eine Frequenz von beispielsweise 13,56 MHz angelegt und ein Plasma erzeugt. Aus dem erzeugten Plasma treffen aktivierte Teilchen auf das in die Drehtrommel 24 eingefüllte Ausgangsmaterial auf. Dies bewirkt eine Strukturveränderung innerhalb des Ausgangsmaterials, also des eingefüllten Feststoffes, in Form des Einbaus von polaren Gruppen (sauerstoff- und/oder stickstoffhaltig). Diese polaren Gruppen sind sowohl reaktive Gruppen (Hydroxylgruppen, Carboxylgruppen, primäre und sekundäre Aminogruppen) als auch nicht reaktive Gruppen (Carbonylgruppen, tertiäre Aminogruppen). Eine Vernetzung findet nicht statt. Durch entsprechende wechselnde Zuführung von unterschiedlichen Prozeßgasen über die Zuleitungen 30 und unterschiedliches Anlegen von Frequenzen über den Generator 28 beziehungsweise die Hochfrequenzeinspeisung 32, kann auf unterschiedliche Zusammensetzungen der Feststoffe Einfluß genommen werden.

In einem konkreten Beispiel wird in die Drehtrommel 24 ein Fettalkohol mit einer Korngröße zwischen 2 mm bis 5 mm eingefüllt. Als Prozeßparameter wird ein Prozeßgasdruck von 0,7 mbar bei einer Umdrehungsgeschwindigkeit von 7 Umdrehungen pro Minute der Drehtrommel 24 eingestellt. Die Leistung des Generators 28 beträgt 1200 W und die der Hochfrequenzeinspeisung 32 600 W. Als Prozeßgase werden Argon, Sauerstoff und Stickstoff zugeführt und der eingebrachte Ausgangsstoff für die Dauer von insgesamt 300 s plasmabehandelt. Im einzelnen erfolgt eine Behandlung mit einem Argonplasma für 30 s unter Hochfrequenzanregung und 30 s unter Mikrowellenanregung, mit einem Sauerstoffplasma für 60 s unter Hochfrequenzanregung und 60 s unter Mikrowellenanregung sowie mit einem Stickstoffplasma für 60 s unter Hochfrequenzanregung und 60 s unter Mikrowellenanregung. Der Generator 28 erzeugt dabei eine Frequenz von 2,45 GHz und die Hochfrequenzeinspeisung 32 eine Frequenz von 13,56 MHz.

Nach Beendigung der Plasmabehandlung konnte bei dem behandelten Fettalkohol durch eine vergleichende Betrachtung festgestellt werden, daß sowohl die Werte des polaren als auch des dispersen Anteils der Grenzflächenenergie bei den erfindungsgemäß plasmabehandelten Fettalkoholen je nach Meßtemperatur bis zu doppelt so hoch wie bei den unbehandelten Fettalkoholen waren. Darüber hinaus stellte sich eine Verschiebung des isoelektrischen Punktes zu einem höheren PH-Wert ein.

## Patentansprüche

1. Verfahren zur Beeinflussung der Dispergierbarkeit, Emulgierbarkeit, Löslichkeit und/oder Reaktivität von niedermolekularen alkylgruppenhaltigen Feststoffen, wobei diese einer Plasmabehandlung unterzogen werden, **dadurch gekennzeichnet,** daß die Plasmabehandlung mit wechselnden Frequenzen in einem Frequenzbereich von 10 kHz bis 10 GHz durchgeführt wird.

2. Verfahren nach einem der vorhergehenden Ansprüche, **dadurch gekennzeichnet,** daß die Plasmabehandlung mit Kombinationen verschieden hoher, wechselnder Frequenzen durchgeführt wird.

3. Verfahren nach einem der vorhergehenden Ansprüche, **dadurch gekennzeichnet,** daß die Plasmabehandlung unter Zufuhr mindestens eines Inertgases, beispielsweise Helium und/oder Argon, durchgeführt wird.

4. Verfahren nach einem der vorhergehenden Ansprüche, **dadurch gekennzeichnet,** daß die Plasmabehandlung unter Zufuhr mindestens eines Reaktionsgases, beispielsweise Sauerstoff und/oder Stickstoff und/oder Monomeren durchgeführt wird.

5. Verfahren nach einem der vorhergehenden Ansprüche, **dadurch gekennzeichnet,** daß die Plasmabehandlung nacheinander mit wenigstens einem Inertgasplasma, wenigstens einem Reaktionsgasplasma oder einem Reaktionsgasgemischplasma oder unter Zufuhr eines Gemisches aus wenigstens einem Inertgas und wenigstens einem Reaktionsgas zugeführt wird.

6. Verfahren nach einem der vorhergehenden Ansprüche, **gekennzeichnet durch** eine alternierende Plasmabehandlung mit wenigstens einem Inertgasplasma, wenigstens einem Reaktionsgasplasma und wenigstens einem Gemisch eines Inertgas-Reaktionsgas-Plasmas.

7. Verfahren nach einem der vorhergehenden Ansprüche, **dadurch gekennzeichnet,** daß die Plasmabehandlung bei einem Prozeßdruck von 0,1 mbar bis 2 mbar erfolgt.

8. Verfahren nach einem der vorhergehenden Ansprüche, **dadurch gekennzeichnet,** daß die Dauer der Plasmabehandlung zwischen 5 Sekunden und 900 Sekunden beträgt.

9. Verfahren nach einem der vorhergehenden Ansprüche, **dadurch gekennzeichnet,** daß die niedermolekularen alkylgruppenhaltigen Feststoffe während der Plasmabehandlung gemischt/verrührt werden.

## Claims

1. A process for influencing the capability of low-molecular solids containing alkyl groups to be dispersed, emulsified, dissolved and/or reacted, in which process the alkyl group-containing solids are subjected to a plasma treatment, **characterized in that** the plasma treatment is carried out at varying frequencies in a frequency range of 10 kHz to 10 GHz.

2. A process according to claim 1, **characterized in that** the plasma treatment is carried out at combinations of varying frequencies of different levels.

3. A process according to one of the proceeding claims, **characterized in that** the plasma treatment is carried out while at least one inert gas, for example helium and/or argon, is supplied.

4. A process according to one of the proceeding claims, **characterized in that** the plasma treatment is carried out while at least one reaction gas, for example oxygen and/or nitrogen and/or monomers, is supplied.

5. A process according to one of the proceeding claims, **characterized in that** the plasma treatment is carried out successively with at least one inert-gas plasma, at least one reaction-gas plasma or while a mixture of at least one inert gas and at least one reaction gas is supplied.

6. A process according to one of the proceeding claims, **characterized by** an alternating plasma treatment with at least one inert-gas plasma, at least one reaction-gas plasma and at least one mixture of an inert-gas/reaction-gas plasma.

7. A process according to one of the proceeding claims, **characterized in that** the plasma treatment is carried out at a process pressure of 0,1 mbar to 2 mbar.

8. A process according to one of the proceeding claims, **characterized in that** the duration of the plasma treatment is between 5 seconds to 900 seconds.

9. A process according to one of the proceeding claims, **characterized in that** the low-molecular solids containing alkyl groups are mixed/stirred during the plasma treatment.

## Revendications

1. Procédé pour influer sur la dispersibilité, l'emulsionnabilité, la solubilité et/ou la réactivité de solides à faible masse moléculaire contenant des groupes alkyle, les solides contenant des groupes alkyle sont soumis à un traitement par du plasma, procédé **caractérisé en ce** que le traitement par du plasma est effectué à des fréquences variables dans un domaine de fréquences de 10 kHz à 10 GHz.

2. Procédé selon la revendication 1, **caractérisé en ce** que le traitement par du plasma est effectué à l'aide des combinaisons de différentes hautes fréquences variables.

3. Procédé selon l'une des revendications précédentes, **caractérisé en ce** que le traitement par du plasma est effectué avec acheminement d'arrivée d'au moins un gaz inerte, par exemple l'hélium et/ou l'argon.

4. Procédé selon l'une des revendications précédentes, **caractérisé en ce** que le traitement par du plasma est effectué avec acheminement d'arrivée d'au moins un gaz de réaction, par exemple l'oxygène et/ou l'azote et/ou des monomères.

5. Procédé selon l'une des revendications précédentes, **caractérisé en ce** que le traitement par du plasma est effectué successivement avec au moins un plasma de gaz inerte, au moins un plasma de gaz de réaction ou sous acheminement d'un mélange d'au moins un gaz inerte et d'au moins un gaz de réaction.

6. Procédé selon l'une des revendications précédentes, **caractérisé par** un traitement alterné par des plasmas à l'aide d'au moins un plasma de gaz inerte, au moins un plasma de gaz de réaction et au moins un mélange d'un plasma de gaz inerte et d'un plasma de gaz de réaction.

7. Procédé selon l'une des revendications précédentes, **caractérisé en ce** que le traitement par du plasma est effectué sous une pression opératoire de 0,1 mbar à 2 mbar.

8. Procédé selon l'une des revendications précédentes, **caractérisé en ce** que la durée du traitement par du plasma se situe entre 5 secondes et 900 secondes.

9. Procédé selon l'une des revendications précédentes, **caractérisé en ce** que les solides à faible masse moléculaire contenant des groupes alkyle sont soumis à mélangeage/agitation pendant le traitement par du plasma.
